# EUROPÄISCHE PATENTSCHRIFT

(11) **EP 2 529 111 B1**
(45) Veröffentlichungstag und Bekanntmachung des Hinweises auf die Patenterteilung: **10.04.2019**
(21) Anmeldenummer: 11702953.8
(22) Anmeldetag: 27.01.2011
(51) Int. Cl.: F03D 13/20, E04H 12/12, E04B 1/21

(54) **WINDENERGIEANLAGE UND WINDENERGIEANLAGEN-TURMSEGMENT**
WIND POWER PLANT AND WIND POWER PLANT TOWER SEGMENT
ÉOLIENNE ET SEGMENT DE MÂT D'ÉOLIENNE

(30) Priorität: 27.01.2010 DE 102010005991
(43) Veröffentlichungstag der Anmeldung: 05.12.2012
(73) Patentinhaber: Wobben Properties GmbH, 26607 Aurich (DE)
(72) Erfinder: KAPITZA, Jan, 26629 Großefehn (DE); PAPADOPOULOS, Panos, 26603 Aurich (DE); HÖLSCHER, Norbert, 26607 Aurich (DE)
(74) Vertreter: Eisenführ Speiser
(86) Internationale Anmeldenummer: PCT/EP2011/051116
(87) Internationale Veröffentlichungsnummer: WO 2011/092235

(56) Entgegenhaltungen:
- EP-A1- 2 253 782
- EP-A2- 1 889 988
- WO-A1-2008/031912
- WO-A1-2011/058158
- US-A- 4 182 092
- US-A- 4 781 006
- US-A1- 2005 102 924
- US-A1- 2009 025 304

## Beschreibung

Die vorliegende Erfindung betrifft ein Windenergieanlagen-Turmsegment sowie einen eine Vielzahl solcher Turmsegmente aufweisenden Windenergieanlagenturm und eine Windenergieanlage mit einem entsprechenden Turm. Ferner betrifft die Erfindung ein Verfahren zum Herstellen mehrerer solcher Turmsegmente.

Eine moderne Windenergieanlage umfasst heutzutage üblicherweise ein Fundament, auf dem ein Windenergieanlagenturm angeordnet ist, der eine Gondel trägt, in der ein Generator aufgenommen ist, dessen Läufer durch einen aerodynamischen Rotor zur Energieerzeugung bei entsprechendem Wind gedreht wird. Türme solcher Windenergieanlagen können Höhen von über 100 m aufweisen. Neben Stahltürmen werden häufig auch Betontürme aus Stahlbeton und/oder Spannbeton eingesetzt. Dabei ist unter einem Betonturm zu verstehen, dass dieser zum überwiegenden Teil aus Beton gefertigt ist. Häufig kann ein oberer Abschnitt aus Stahl gefertigt sein.

Ein solcher Turm weist im Wesentlichen eine rohrförmige Form auf und unterscheidet sich üblicherweise von einer streng zylindrischen Form darin, dass er vom Fundament zur Gondel im Durchmesser abnimmt.

Ein solcher Betonturm ist üblicherweise aus mehreren Betonfertigteilen aufgebaut. Zum einen weist ein solcher Turm in vertikaler Richtung mehrere übereinander angeordnete Turmabschnitte auf, die üblicherweise in vertikaler Richtung durch Spannseile miteinander fest verspannt sind. Jeder dieser Turmabschnitte, zumindest aber Turmabschnitte aus dem unteren Bereich des Betonturmes sind aus Mantelsegmenten zusammengesetzt. Beispielsweise kann ein Turmabschnitt aus zwei Halbschalen, die im Grunde jeweils ein 180 Grad Segment des Turmabschnitts bilden, zusammengesetzt sein. Diese Turmsegmente sind meist als Betonfertigteile industriell vorgefertigt und werden beim Aufbau des Turms vorort zusammengesetzt und verbunden. Die Notwendigkeit, die Turmabschnitte in mehrere Segmente zu unterteilen, ist üblicherweise durch den notwendigen Transport der Elemente von ihrem Herstellungsort zum Aufstellungsort der Windenergieanlage begründet.

Turmsegmente eines Turmabschnittes, der auch als Turmschuss bezeichnet werden kann, werden üblicherweise Vorort an senkrechten Stoßkanten zusammengesetzt. An diesen Stoßkanten ragen Abschnitte der Bewehrung heraus, so dass die Segmente hier mittels eines Riegels miteinander verbunden werden können. Die verbleibende vertikale Fuge wird anschließend vermörtelt.

Nachteilig hierbei ist, dass recht viel Handarbeit zum Verbinden der Turmsegmente untereinander benötigt wird. Das Vermörteln birgt zudem die Gefahr der Korrosion der Bewehrungsabschnitte in diesem Bereich, insbesondere wenn das Vermörteln nicht sachgerecht oder fehlerhaft geschieht. Dabei können Fehler oder Fehlstellen selbst bei sorgfältiger Ausführung auftreten. Solche Fehlstellen können beispielsweise eingeschlossene Wasser- und Luftblasen oder von der Bewehrung nach außen führende Kapillare sein.

Zudem ist die erreichbare Positionierungsgenauigkeit solcher Turmsegmente zueinander begrenzt und liegt üblicherweise im Bereich von ± 10 mm. Weiterhin kann das Vermörteln im Winter bei tiefen Temperaturen problematisch sein.

Die internationale Anmeldung WO 2008/031912 A1 betrifft einen Windenergieanlagenturm, der vorgefertigte Betonteile aufweist.

Das Dokument US 2009/025304 A1 betrifft einen segmentierten Betonturm, bei dem die Segmente übereinander angeordnet sind und jeweils drei Segmente in einer Ebene vorgesehen sind. Die jeweils drei Segmente einer Ebene werden durch ein außen umlaufendes Band zusammengehalten.

Das Dokument US 2005/102924 A1 betrifft einen Stützschuh für eine Betonsäule.

Der Erfindung liegt daher die Aufgabe zugrunde, wenigstens eines der genannten Probleme zu beheben oder zu verringern. Insbesondere soll eine Lösung vorgeschlagen werden, um das Verbinden mehrerer Turmsegmente miteinander zu vereinfachen und/oder hinsichtlich Positionsgenauigkeit und/oder Zuverlässigkeit und/oder Haltbarkeit zu verbessern. Zumindest soll eine alternative Lösung vorgeschlagen werden.

Erfindungsgemäß wird ein Turmsegment gemäß Anspruch 1 vorgeschlagen.

Ein solches Turmsegment ist als Mantelsegment ausgebildet und dazu vorbereitet, mit wenigstens einem weiteren solchen oder ähnlichen Turmsegment zu einem Turmabschnitt, der auch als Turmstoß bezeichnet wird, zusammengesetzt zu werden. Unter einem Turmabschnitt ist insoweit ein rohrförmiger, in Umfangsrichtung geschlossener Abschnitt zu verstehen. Ein Turm weist mehrere übereinander angeordnete Turmabschnitte auf.

Das Turmsegment weist einen Stahlbetonkörper und damit einen mit einer Bewehrung versehenen Betonkörper auf. Zum Zusammensetzen mit wenigstens einem weiteren Turmsegment sind zwei Stöße zum Ansetzen an Stöße wenigstens eines weiteren, insbesondere ähnlichen oder identischen Turmsegmentes vorgesehen, das in derselben Ebene angeordnet ist, um dadurch einen Turmabschnitt herstellen zu können. Ein solcher Stoß ist eine Fläche und weist im Wesentlichen oder maximal eine Länge gemäß der Höhe des Turmsegmentes und eine Breite gemäß der Dicke des Turmsegmentes, also der Wandungsstärke des Turmsegmentes auf. Mit anderen Worten entspricht ein solcher Stoß einer Schnittfläche eines senkrechten Schnittes durch das Turmsegment, wobei der Stoß gegebenenfalls etwas kleiner und insbesondere etwas schmaler ausfallen kann.

Im Bereich jedes Stoßes ist wenigstens ein Verbindungskörper eingelassen und darin verankert. Ein solcher Verbindungskörper ist dazu vorbereitet und vorgesehen, mit einem weiteren Verbindungskörper des benachbarten Turmsegmentes verbunden zu werden. Hierbei können sich beide Verbindungskörper berühren, oder es ist wenigstens ein wenig anderes Material dazwischen, insbesondere Beton. Der Verbindungskörper weist eine im Wesentlichen parallel zum jeweiligen Stoß angeordnete Befestigungswandung auf, zum Aufnehmen einer quer zum Stoß und quer zur Befestigungswandung gerichteten Zugbelastung. Hier kann eine feste Verbindung des Verbindungskörpers mit einem Verbindungskörper eines weiteren Turmsegmentes erfolgen. Hierdurch wird durch die Verankerung des Verbindungskörpers in dem Stahlbetonkörper eine feste Verbindung besagter Turmsegmente untereinander erreicht. Dabei sind vorzugsweise mehrere Verbindungskörper entlang eines Stoßes, insbesondere mit gleichen Abständen angeordnet.

Erfindungsgemäß können somit zwei Turmsegmente Stoß an Stoß fest miteinander verbunden werden. Es wird eine hohe Genauigkeit bei dieser Verbindung erreicht, die im Wesentlichen von der Fertigungsgenauigkeit der Turmsegmente bestimmt wird.

Vorzugsweise ist das Turmsegment ein Betonfertigteil. Ein solches Betonfertigteil kann industriell vorgefertigt werden, wodurch eine hohe Qualität und damit Festigkeit des Stahlbetonkörpers erreicht werden kann. Zudem kann eine hohe Genauigkeit und Güte der Stöße erreicht werden.

Erfindungsgemäß ist der Verbindungskörper als Verbindungskasten oder Stahlnische ausgebildet. Nachfolgend werden die Begriffe Verbindungskasten und Stahlnische synonym verwendet.

Erfindungsgemäß weist der Verbindungskasten mehrere, insbesondere drei an die Befestigungswandung angrenzende Seitenwände auf, um dadurch einen Hohlraum, insbesondere eine Nische, zu bilden. Die Seitenwände und die Befestigungswandung sind dabei fest miteinander verbunden. Der Verbindungskörper weist hierbei zudem eine offene, von außen zugängliche Seite auf, wobei der Verbindungskörper mit in den Stahlbetonkörper eingelassenen Bewehrungsstäben fest verbunden ist, so dass hierdurch die Verankerung des Verbindungskörpers in dem Stahlbetonkörper erfolgt. Durch die offene von außen zugängliche Seite wird der Hohlraum zugänglich. Das heißt es kann von außerhalb des Turmsegmentes auf den Hohlraum zugegriffen werden. Dabei ist das Turmsegment vorzugsweise so konstruiert, dass auf den Hohlraum zwar von außerhalb des Turmsegmentes, aber von innerhalb eines aufgebauten oder aufzubauenden Windenergieanlagenturmes zugegriffen werden kann. Dieser nach außen hin offene Hohlraum bzw. die nach außen hin offene Nische wäre demnach nicht oder jedenfalls weniger Witterungseinflüssen ausgesetzt.

Erfindungsgemäß wird ein Turmsegment vorgeschlagen, das dadurch gekennzeichnet ist, dass eine erste der Seitenwände der offenen Seite gegenüber liegt und wenigstens ein mit der ersten Seitenwand verbundener Bewehrungsstab relativ zu wenigstens einem mit einer der übrigen Seitenwände verbundenem Bewehrungsstab um einen Neigungswinkel geneigt ist, wobei der Neigungswinkel vorzugsweise im Bereich von etwa 2- 8 Grad liegt, weiter vorzugsweise im Bereich von etwa 3 - 5 Grad liegt und insbesondere etwa 4 Grad beträgt.

Durch das Vorsehen von Neigungen der Bewehrungsstäbe zueinander und damit die Befestigung der Bewehrungsstäbe mit unterschiedlichen Neigungen an dem Verbindungskörper können Kräfte in entsprechend unterschiedliche Richtung abgeleitet werden. Hierdurch kann dem rohrförmigen Aufbau des Windenergieanlagenturmes und damit der gewölbten Form des Turmsegmentes Rechnung getragen werden. Der Neigungswinkel kann im Bereich von 2 bis 8 Grad liegen, was insbesondere vom Turmdurchmesser im Bereich des betreffenden Turmsegmentes abhängen kann. Je kleiner der Durchmesser, desto größer kann der Neigungswinkel gewählt werden. Für übliche Durchmesser sind Neigungswinkel von 3 bis 5 Grad, insbesondere etwa 4 Grad günstig.

Vorzugsweise ist der Verbindungskörper so in dem Stahlbetonkörper angeordnet, insbesondere einbetoniert, dass er von außen zugänglich ist. Insbesondere ist so auch ein Zugriff auf die über den Verbindungskörper vorgenommene Verbindung mit einem anderen Verbindungskörper eines angrenzenden Segmentes möglich. Die Bewehrungsstäbe sind hingegen so angeordnet und mit dem Verbindungskörper verbunden, dass diese vollständig in dem Turmsegment eingeschlossen und somit von außen unzugänglich sind. Hierdurch kann ein Korrosionsschutz für die Bewehrungsstäbe in nachhaltiger Weise erreicht werden. Die Bewehrungsstäbe sind dabei im Wesentlichen von Beton eingeschlossen und an der Verbindungsstelle zum Verbindungskörper werden sie durch den Verbindungskörper eingeschlossen bzw. nach außen abgeschirmt.

Eine bevorzugte Befestigung der Bewehrungsstäbe mit dem Verbindungskörper erfolgt mittels Verschweißen. Hierdurch ist eine dauerhafte und widerstandsfähige Verbindung erreichbar, über die zudem eine hohe Kraftübertragung erfolgen kann.

Eine weitere günstige Ausgestaltung schlägt vor, dass die Befestigungswandung etwa mit dem Stoß abschließt und/oder dass die Befestigungswandung wenigstens eine Befestigungsöffnung zum Durchführen wenigstens eines Spannmittels, insbesondere einer Schraube, aufweist um durch dieses Spannmittel eine Zugbelastung von einem weiteren Turmsegment auf die Befestigungswandung zu übertragen.

Dass die Befestigungswandung etwa mit dem Stoß abschließt, bedeutet, dass der Verbindungskörper so in den Stahlbetonkörper eingelassen ist, dass eine Außenfläche der Verbindungswandung einen Teil des Stoßes, also der Kontaktfläche zu einem benachbarten Segment, bildet. Hierdurch kann beim Aneinandersetzen zweier Segmente an ihrem Stoß und entsprechender Anordnung der Verbindungskörper in beiden Stößen ein unmittelbarer Kontakt der Verbindungskörper miteinander hergestellt werden. Entsprechend ist auf einfache Weise ein festes Verbinden der Verbindungskörper und damit der Segmente erreichbar. Beide Segmente werden somit unmittelbar Stoß an Stoß befestigt, so dass ein Vermörteln im Wesentlichen oder vollständig unterbleiben kann. Gegebenenfalls kann eine elastische Dichtungsmasse vorgesehen sein.

Auch für den Fall, dass die Befestigungswandung etwa mit dem Stoß abschließt, können Bewehrungsstäbe so mit dem Verbindungskörper verbunden werden, dass sie nicht von außen zugänglich sind. Mit anderen Worten können die Bewehrungsstäbe in Bezug auf den Stoß etwas zurückgesetzt an dem Verbindungskörper befestigt werden.

Durch das Vorsehen wenigstens einer Befestigungsöffnung in der Befestigungswandung zum Durchführen eines Spannmittels, wie einer Schraube, kann auf einfache Weise eine Befestigungsmöglichkeit und letztendlich auch eine Verspannmöglichkeit zweier Verbindungskörper gegeneinander geschaffen werden. So kann eine solche Schraube oder Gewindestange zwei benachbarte Verbindungskörper zweier benachbarter Turmsegmente verbinden. Ist der Verbindungskörper als Verbindungskasten mit einem von außen zugänglichen Hohlraum bzw. Nische versehen, so kann in diesem Hohlraum bzw. dieser Nische das Befestigen, insbesondere Festschrauben bei beiden miteinander zu verbindenden Verbindungskörpern vorgenommen werden.

Hierdurch ist eine feste und auch sehr präzise Stoß-an-Stoß-Verbindung zweier Segmente erreichbar, weil das feste Verbinden oder Festziehen nicht im Bereich der Kontaktfläche bzw. Fuge erfolgt, sondern in den von außen zugänglichen Hohlräumen bzw. Nischen. Um abschließend einer Korrosion, insbesondere auch einer Korrosion der Verbindungskörper, zusätzlich entgegenzuwirken, wird vorgeschlagen, nach Abschluss der festen Verbindung eine Gummischalung für die Hohlräume bzw. Nischen vorzusehen.

Erfindungsgemäß wird zudem vorgeschlagen, einen Windenergieanlagenturm zumindest zum Teil aus erfindungsgemäßen Turmsegmenten aufzubauen. Hierbei werden ebenenweise wenigstens zwei Turmsegmente zu einem Turmabschnitt bzw. Turmschuss zusammengesetzt, wobei die Turmsegmente Stoß an Stoß aneinander gesetzt werden und mittels der Verbindungskörper miteinander verbunden werden. Solche Turmabschnitte werden dann übereinander angeordnet, wobei höher gelegene Turmabschnitte im Durchmesser üblicherweise zunehmend kleiner werden. Die Turmabschnitte werden dabei so übereinander angeordnet, dass benachbarte Turmabschnitte zueinander versetzte Stöße bzw. zueinander versetzte, im Bereich der Stöße gebildete, Fugen aufweisen.

Vorzugsweise ist eine Windenergieanlage vorgesehen, die einen erfindungsgemäßen Windenergieanlagenturm aufweist bzw. mehrere erfindungsgemäße Turmsegmente aufweist. Durch die Verwendung erfindungsgemäßer Turmsegmente bzw. eines erfindungsgemäßen Turmes kann mitunter auch die Laufzeit der Windenergieanlage verlängert oder Wartungsintervalle verlängert werden.

Erfindungsgemäß wird zudem ein Verfahren zum Herstellen mehrerer Turmsegmente für einen Windenergieanlagenturm gemäß Anspruch 8 vorgeschlagen.

Demnach werden mehrere Turmsegmente gleichzeitig in einer Form bzw. Schalung hergestellt. Hierzu wird in der betreffenden Form oder Schalung jeweils für jedes der zugleich herzustellenden Turmsegmente eine Bewehrung und die Verbindungskörper einschließlich deren Verankerung vorbereitet. Die Verankerung kann dabei ein Verschweißen der Verbindungskörper mit einigen Bewehrungsstäben der Bewehrung bedeuten. Dabei kommt es nicht darauf an, ob eine solche Verschweißung Vorort in der Form erfolgt oder zuvor in einem weiteren Vorbereitungsschritt erfolgt.

Sind Bewehrung und Verbindungskörper an ihren Positionen, kann die Form mit Beton aufgefüllt werden. Der Beton muss nun zunächst aushärten, bis er entnommen werden kann. Ein Entnehmen bedeutet üblicherweise, dass der Beton an Ort und Stelle zunächst stehenbleibt und vielmehr die Form oder Schalung, die hier zumeist mehrteilig ausgebildet ist, entfernt wird.

Die Betonform bzw. Schalung ist vorgesehen für einen vollständigen Turmabschnitt, also einen in Umfangsrichtung vollständig geschlossenen Rohrmantel. Ein entsprechendes Betonteil, insbesondere ein entsprechender Stahlbetonkörper ist somit bei dem oben beschriebenen Aushärten entstanden. Die vorgesehenen Verbindungskörper sind entsprechend immer paarweise angeordnet, nämlich immer jeweils ein Verbindungskörper für jeden zweier benachbarter Turmsegmente.

Zum Transport werden diese so entstandenen Turmsegmente, wie beispielsweise zwei Halbschalen, getrennt. Am Aufstellungsort der Windenergieanlage werden diese Segmente nun wieder so zusammengesetzt, wie sie bereits bei der beschriebenen Herstellung in der Betonform zueinander angeordnet waren.

Hierdurch kann eine hohe Fertigungsgenauigkeit, insbesondere eine sehr gute Anpassung der zu verbindenden Turmsegmente aneinander erreicht werden, da diese bereits in der Form zwangsläufig aneinander angepasst waren. Das Trennen der so in eine Betonform hergestellten Turmsegmente kann beispielsweise durch das Vorsehen einer Trennschichten an den Stößen, wie einer Trennplatte, erreicht werden.

Durch die Verwendung von Verschlussmitteln wie beispielsweise einer Gummischalung kann verhindert werden, dass sich der Hohlraum bzw. die Nische eines Verbindungskörpers beim Einfüllen des Betons in die Form zusetzt.

Erfindungsgemäß wird zudem ein Verbindungskörper gemäß Anspruch 10 vorgeschlagen.

Durch das Bereitstellen eines solchen Verbindungskörpers kann somit ein Turmsegment ausgestattet und der Aufbau eines Windenergieanlagenturms aus solchen Turmsegmenten vereinfacht werden.

Erfindungsgemäß wird auch ein Verbindungskörperpaar vorgeschlagen, umfassend zwei unterschiedliche Verbindungskörper, die jeweils aneinander angepasst sind. In dem Stoßbereich, in dem diese aneinandergesetzt werden, weist der eine eine Vertiefung und der andere eine korrespondierende Erhebung auf. Vorzugsweise werden somit solche Verbindungskörper paarweise bereitgestellt und so in Turmsegmenten eingebaut, dass die korrespondierenden Verbindungskörper, insbesondere Stahlnischen aneinander zu liegen kommen und die korrespondierenden Bereiche ineinander greifen. Somit wird auch vorgeschlagen, ein Turmsegment vorzusehen, das zwei Stoßseiten zum Ansetzen an eine bzw. zwei andere Stoßseiten eines anderen Turmsegmentes aufweist. Zur einen Stoßseite wird dann als nächstes ein erster Verbindungskörper mit einer Vertiefung und an der anderen Stoßseite wenigstens ein zweiter Verbindungskörper mit einer korrespondierenden Erhebung eingearbeitet. Auf diese Art und Weise können mehrere Turmsegmente vorgesehen und dann entsprechend beim Aufbau eines Windenergieanlagenturms zusammengesetzt werden.

Nachfolgend wird die Erfindung exemplarisch anhand von Ausführungsbeispielen unter Bezugnahme auf die begleitenden Fig. erläutert.
- Fig. 1: zeigt einen Teilbereich eines erfindungsgemäßen Windenergieanlagenturmes perspektivisch in einer Teilschnittansicht.
- Fig. 2: zeigt eine Draufsicht auf den ungeschnittenen Teilbereich eines Windenergieanlagenturmes gemäß Fig. 1.
- Fig. 3: zeigt eine seitliche Schnittansicht gemäß der Schnittlinie A-A gemäß Fig. 2.
- Fig. 4: zeigt eine weitere Ansicht eines Teilbereichs eines Windenergieanlagenturmes gemäß Fig. 1.
- Fig. 5: zeigt eine perspektivische Schnittansicht eines aus zwei erfindungsgemäßen Turmsegmenten zusammengesetzten Turmabschnittes.
- Fig. 6: zeigt einen Ausschnitt aus einem Stoßbereich zweier erfindungsgemäßer miteinander verbundener Turmsegmente.
- Fig. 7: zeigt einen Ausschnitt zweier erfindungsgemäßer Turmsegmente in einem Stoßbereich in einer Draufsicht und Teilschnittansicht.
- Fig. 8: zeigt einen erfindungsgemäßen Verbindungskörper in einer perspektivischen Ansicht.
- Fig. 9: zeigt den Verbindungskörper der Fig. 8 in einer Draufsicht.
- Fig. 10: zeigt den Verbindungskörper der Fig. 8 in einer Seitenansicht.
- Fig. 11: zeigt den Verbindungskörper der Fig. 8 in einer Frontansicht.
- Fig. 12: zeigt einen ersten und zweiten miteinander verbundenen Verbindungskörper in einer Seitenansicht.

Nachfolgend können identische Bezugszeichen ähnliche Elemente unterschiedlicher Ausführungsformen bezeichnen.

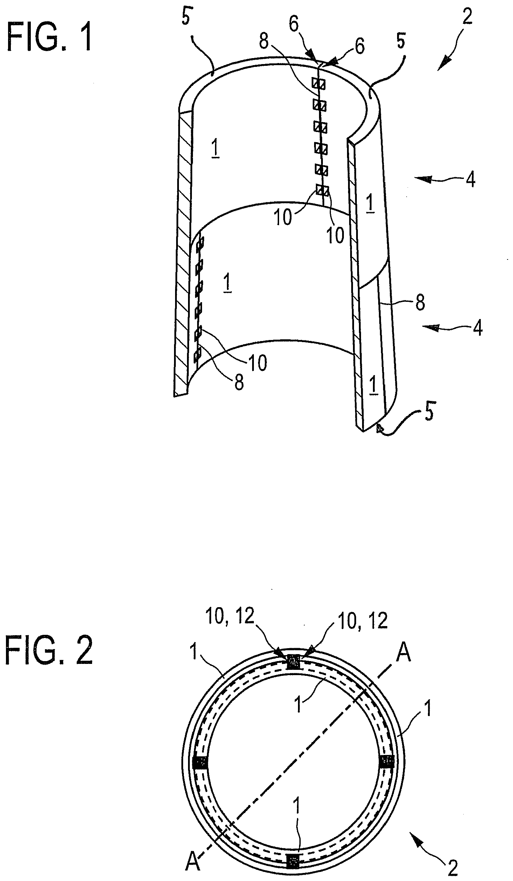

Fig. 1 zeigt einen Teilbereich 2 eines Windenergieanlagenturmes gemäß der vorliegenden Erfindung einer perspektivischen teilgeschnittenen Ansicht. Der Teilbereich 2 ist aus zwei Turmabschnitten 4 bzw. Turmschüssen 4 zusammengesetzt, die übereinander auf ihren Stirnflächen 5 angeordnet sind. Jeder Turmabschnitt 4 ist jeweils aus zwei Turmsegmenten 1 zusammengesetzt. Jeweils zwei Turmsegmente 1 sind an Stößen 6 zusammengesetzt. Im Bereich zweier Stöße 6 ergibt sich jeweils eine Fuge 8, die aber verhältnismäßig dünn ausfällt und im Grunde vernachlässigbar ist. Tatsächlich wird eine Fuge durch die Stoß-an-Stoß Anordnung vermieden. Im Bereich jedes Stoßes 6 sind sechs Verbindungskörper angeordnet, von denen die von außen zugängliche Nische 10 erkennbar ist. An jeder Fuge 8 sind somit sechs Paar Verbindungskörper und damit sechs Paar Nischen 10 angeordnet. Die Verbindungskörper sind dabei paarweise miteinander verbunden. Zum Verbinden können Schrauben in den Nischen festgezogen werden.

Die Fugen 8 des dargestellten unteren Turmabschnittes 4 sind gegenüber den Fugen 8 des dargestellten oberen Turmabschnittes 4 des Windenergieanlagenturmteilbereiches 2 versetzt angeordnet. Somit sind die Fugen 8 übereinander angeordneter Turmabschnitte 4 nicht in einer Flucht, wodurch die Gesamtstabilität des Windenergieanlagenturms verbessert werden kann.

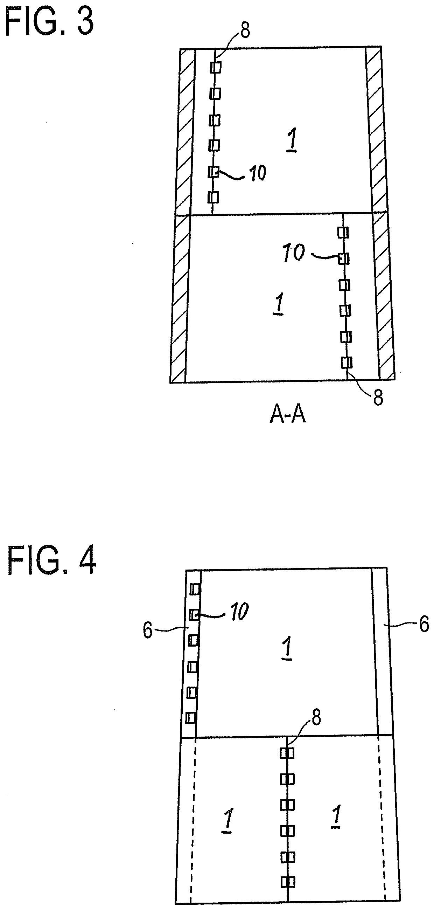

Der Versatz der Verbindungskörper 12 und damit der Nischen 10 ist besonders deutlich in der Draufsicht der Fig. 2 zu erkennen. Die Fig. 2 zeigt zudem deutlich, dass jeder Turmabschnitt 4 aus zwei halbschalenförmigen Turmsegmenten 1 zusammengesetzt ist. Fig. 3 und 4 zeigen weitere Ansichten des Teilbereichs 2 des Windenergieanlagenturmes.

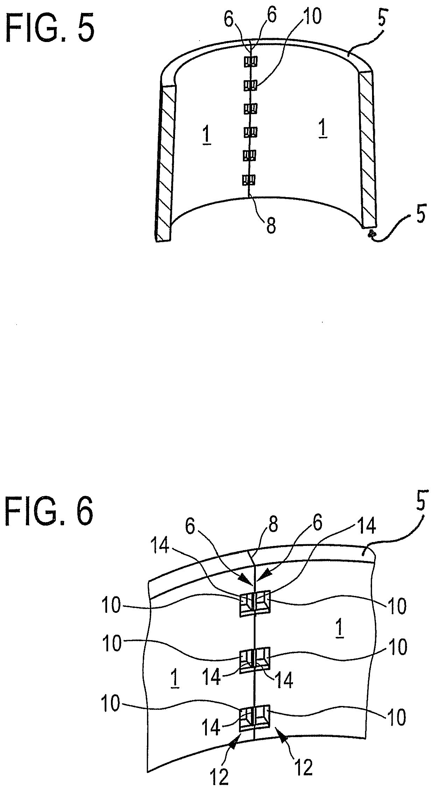

In Fig. 5 sind zwei Turmsegmente 1, die an ihren Stößen 6 aneinandergesetzt und verbunden sind, isoliert in einer weiteren Ansicht gezeigt. Der Ausschnitt der Fig. 6 verdeutlicht die Anordnung zweier Turmsegmente 1 im Bereich ihrer Stöße 6. Jeweils 2 Verbindungskörper 12, von denen nur ein Teil in der Fig. 5 zu erkennen ist, sind im Bereich der Stöße 6 und damit im Bereich der Fuge 8 gegeneinander angeordnet und miteinander befestigt. Dazu weist jeder Verbindungskörper 12 eine Verbindungswandung 14 auf.

Jeder Verbindungskörper 12 ist dabei so in das Turmsegment 1 eingelassen bzw. einbetoniert, dass die jeweilige Verbindungswandung 14 mit dem jeweiligen Stoß 6 abschließt. Weil jeweils ein Verbindungskörper 12 des einen Turmsegmentes 1 auf gleicher Höhe mit einem Verbindungskörper 12 eines anderen Turmsegmentes 1 angeordnet ist, berühren sich ihre Verbindungswandungen 14 jeweils im Bereich der angrenzenden Stöße 6 bzw. der Fuge 8. Durch das paarweise Auftreten zweier Verbindungskörper 12 können diese somit unmittelbar miteinander verbunden und fest verschraubt werden, um dadurch eine feste Verbindung der Turmsegmente 1 miteinander zu erreichen.

Aus der Fig. 6 wird auch deutlich, dass die beiden Turmsegmente 1 im Bereich ihrer Stöße 6 plan aneinander gesetzt werden können. Die Fuge 8 ist im Grunde verschwindend gering und tritt im Grunde nur noch an der Oberfläche auf.

Den Fig. 1 bis 6 ist zudem zu entnehmen, dass die Nischen 10 von außerhalb des jeweiligen Turmsegmentes 1, dabei aber vom Inneren des Windenergieanlagenturmes zugänglich sind. Insbesondere die Fig. 1 zeigt auch in der Darstellung rechts unten eine Fuge 8, die zum Turmäußeren weist. Dort sind keinen Nischen 10 zu erkennen und daher von der Turmaußenseite nicht zugänglich.

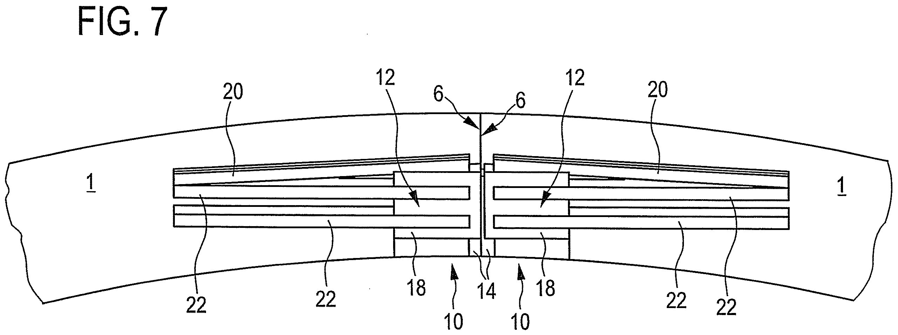

Fig. 7 zeigt eine Draufsicht auf einen teilgeschnittenen Ausschnitt zweier aneinander gesetzter Turmsegmente 1. Es ist zu beachten, dass der besseren Übersichtlichkeit halber etwaige Schnittflächen nicht mit einer Schraffur versehen sind. Die beiden Turmsegmente 1 gemäß Fig. 7 sind im Bereich ihrer Stöße 6 aneinander gesetzt. Die Fig. 7 zeigt hierbei keinerlei Zwischenraum zwischen den Stößen 6.

Durch die Schnittansicht und vergrößerte Darstellung wird der Aufbau der Verbindungskörper 12 deutlicher, die im Wesentlichen jeweils eine Verbindungswandung 14 aufweisen, die im Bereich der Stöße 6 aneinander liegen. Jeder Verbindungskörper 12 weist eine erste Seitenwand auf, die in der Darstellung der Fig. 7 allerdings nicht zu erkennen ist. Außerdem ist von jedem Verbindungskörper 12 eine zweite Seitenwand 18 dargestellt. Jede zweite Seitenwand 18 ist jeweils mit der betreffenden Verbindungswandung 14 verbunden.

An der ersten Seitenwand sind erste Bewehrungsstäbe 20 befestigt und an jeder zweiten Seitenwand 18 sind zweite Bewehrungsstäbe 22 befestigt. Die ersten Bewehrungsstäbe 20 sind gegenüber den zweiten Bewehrungsstäben 22 leicht geneigt, wobei in der gezeigten Ausführungsform die Neigung etwa 4 Grad beträgt. Gegebenenfalls können zwischen Bewehrungsstäben weitere Neigungen vorgesehen sein.

Somit sind die Verbindungskörper 12 im Bereich der Verbindungswandungen 14 miteinander befestigt. Etwaige Kräfte werden von der jeweiligen Verbindungswandung 14 auf die erste Seitenwand und die zweiten Seitenwände 18 übertragen und von dort über die ersten Bewehrungsstäbe 20 und zweiten Bewehrungsstäbe 22 weiter auf das jeweilige Turmsegment geleitet, in dem die Bewehrungsstäbe 20 und 22 und somit der Verbindungskörper 12 verankert sind.

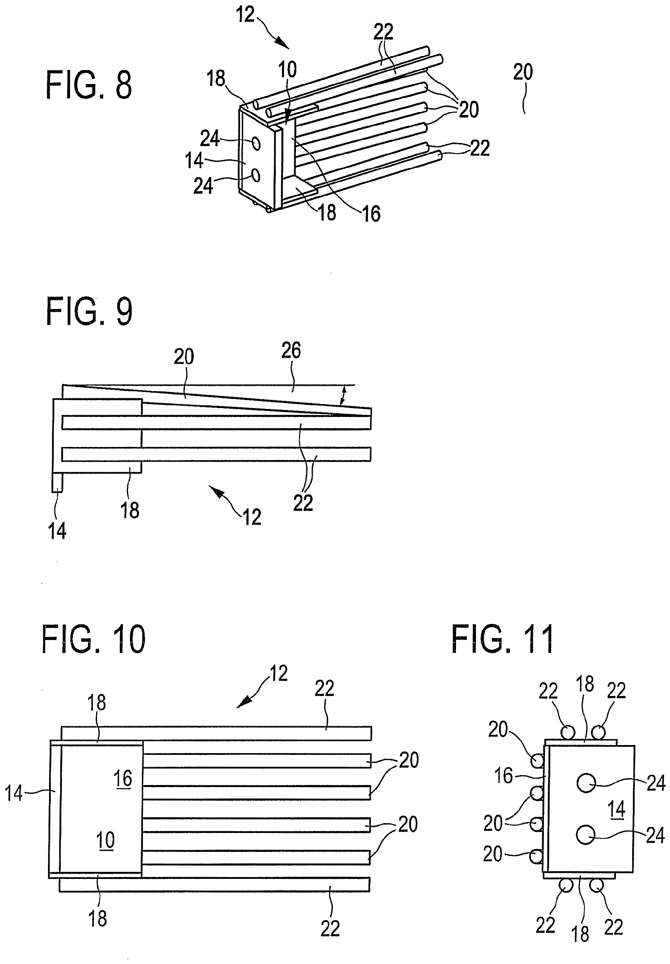

Die perspektivische Darstellung der Fig. 8 zeigt einen Verbindungskörper 12, der als Verbindungskasten oder Stahlnische ausgebildet ist. Er weist eine Verbindungswandung 14 mit einer damit verbundenen ersten Seitenwand 16 und zwei zweiten Seitenwänden 18 auf. Die Verbindungswandung 14, die erste Seitenwand 16 und die beiden zweiten Seitenwände 18 bilden zusammen eine Nische. An jeder zweiten Seitenwand 18 sind jeweils zwei zweite Bewehrungsstäbe 22 und an der ersten Seitenwand 16 sind vier erste Bewehrungsstäbe 20 befestigt. Die Fig. 8 bis 11 zeigen die Bewehrungsstäbe 20, 22 mit einer abgeschlossenen Länge. Die Bewehrungsstäbe 20,22 können aber länger ausgebildet sein und bei einer Verankerung in dem jeweiligen Turmsegment 1 kann zudem eine Verbindung mit weiteren Bewehrungselementen vorgesehen sein.

In Fig. 8 sind zudem zwei Verbindungsöffnungen 24 in der Verbindungswandung 14 dargestellt. Diese Verbindungsöffnungen 24 sind im Grunde als Bohrungen 24 ausgestaltet und dazu geeignet, eine Schraube hindurch zu führen, wobei ein Schraubenkopf bzw. eine Schraubenmutter an einer zur Nische 10 gewandten Fläche der Verbindungswandung 14 anliegen kann.

Die Draufsicht in der Fig. 9 auf den Verbindungskörper 12 zeigt eine zweite Seitenwand 18 sowie einen Teil der Verbindungswandung 14. Die Fig. 9 ist als Draufsicht bezeichnet, da die vorliegende Ansicht einer Blickrichtung von oben nach unten für den Fall einer bestimmungsgemäßen Anordnung in einem aufgestellten Windenergieanlagenturm entspricht. Die Neigung zwischen den ersten Bewehrungsstäben 20 und den zweiten Bewehrungsstäben 22 ist als Neigungswinkel 26 in der Fig. 9 eingezeichnet.

Fig. 10 zeigt eine Ansicht auf die Nische 10 des Verbindungskörpers 12. Die Nische 10 wird zwischen der ersten Seitenwand 16, der Verbindungswandung 14 und den beiden zweiten Seitenwänden 18 ausgebildet. Aus den Fig. 8 bis 10 wird zudem deutlich, dass die Bewehrungsstäbe 20, 22 etwas hinter der Verbindungswandung 14 zurückgezogen angeordnet sind.

Die Frontansicht der Fig. 11 verdeutlicht die Anordnung der Verbindungsöffnungen 24 in der Verbindungswandung 14 und dass die Verbindungswandung 14 im Grunde von drei Seiten, nämlich von der ersten Seitenwand 16 und den beiden zweiten Seitenwänden 18 eingefasst ist. Auch ist die Verbindungswandung 14 und damit die Verbindungsöffnungen 24 von drei Seiten von den ersten und zweiten Bewehrungsstäben 20, 22 eingefasst, um dadurch letztlich einen Lastabtrag über die Verbindungswandung 14 zu den Bewehrungsstäben 20, 22 und von dort aus in den entsprechenden Stahlbetonköper eines Turmsegmentes zu erreichen.

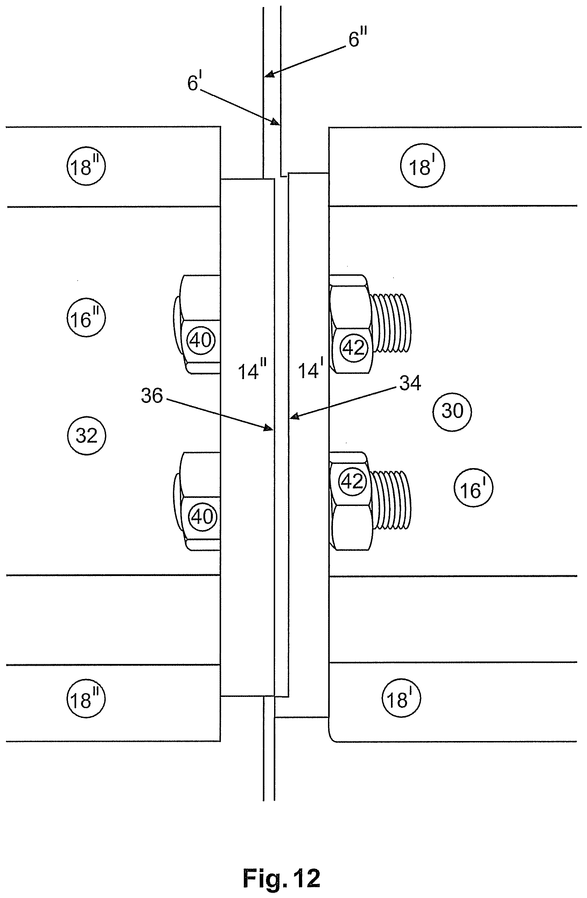

Fig. 12 zeigt einen ersten Verbindungskörper 30, der mit einem zweiten Verbindungskörper 32 mittels Schrauben und Muttern 40 bzw. 42 fest miteinander verbunden und verschraubt ist. Die Verbindungskörper 30, 32 sind hierbei im Bereich ihrer Verbindungswandungen 14' bzw. 14" aneinander gesetzt. Im Bereich der Verbindungswandung 14' weist der erste Verbindungskörper 30 eine Vertiefung 34 auf. Diese Vertiefung weist somit auch eine Vertiefung relativ zu einem Stoß 6' des ersten Verbindungskörpers 30 auf. Der zweite Verbindungskörper 32 weist hierzu als Pendant einen erhabenen Bereich bzw. eine Erhöhung oder eine Erhebung 36 im Bereich seiner Verbindungswandung 14" auf. Diese Erhebung 36 erhebt sich dabei auch über einen Stoß 6" hinaus und ist dazu vorgesehen, in den eingelassenen Bereich bzw. die Vertiefung 34 eingesetzt zu werden, wie dies in Fig. 12 dargestellt ist. Hierdurch werden Verbindungseigenschaften verbessert, und es kann jedenfalls für den ersten Verbindungskörper und das Turmsegment, in dem diese eingelassen ist, auch bei leichten Fertigungstoleranzen ein Überstehen des Verbindungskörpers, nämlich der gezeigten Stahlnische, vermieden werden.

## Patentansprüche

1. Windenergieanlagen-Turmsegment (1), wobei das Turmsegment (1) als Mantelsegment ausgebildet ist und einen Stahlbetonkörper aufweist, mit zwei Stößen (6) zum Ansetzen an Stöße wenigstens eines weiteren Turmsegmentes, und in den Stahlbetonkörper ist im Bereich jedes Stoßes (6) wenigstens ein Verbindungskörper eingelassen und darin verankert zum Verbinden mit einem Verbindungskörper (12) eines benachbarten Turmsegments, und der Verbindungskörper (12) weist eine im Wesentlichen parallel zum jeweiligen Stoß (6) angeordnete Befestigungswandung (14) auf zum Aufnehmen einer quer zum Stoß (6) und quer zur Befestigungswandung (14) gerichteten Zugbelastung,
wobei der Verbindungskörper (12) als Verbindungskasten oder Stahlnische ausgebildet ist mit mehreren, insbesondere drei an die Befestigungswandung angrenzenden Seitenwänden (16, 18), um dadurch einen Hohlraum, insbesondere eine Nische (10) zu bilden, und wobei der Verbindungskörper (12) eine offene, von außen zugängliche Seite aufweist und dass der Verbindungskörper (12) mit in den Stahlbetonkörper eingelassenen Bewehrungsstäben (20, 22) fest verbunden ist zum Verankern des Verbindungskörpers (12) in dem Stahlbetonkörper,
wobei eine erste der Seitenwände (16, 18) der offenen Seite gegenüber liegt und wenigstens ein mit der ersten Seitenwand (16) verbundener Bewehrungsstab (20) relativ zu wenigstens einem mit einer der übrigen Seitenwände (18) verbundenem Bewehrungsstab (22) um einen Neigungswinkel (26) geneigt ist, wobei der Neigungswinkel (26) vorzugsweise im Bereich von etwa 2- 8 Grad liegt, weiter vorzugsweise im Bereich von etwa 3 - 5 Grad liegt und insbesondere etwa 4 Grad beträgt.

2. Turmsegment (1) nach Anspruch 1,
**dadurch gekennzeichnet, dass** das Turmsegment (1) ein Betonfertigteil ist.

3. Turmsegment (1) nach einem der vorstehenden Ansprüche,
**dadurch gekennzeichnet, dass** der Verbindungskörper (12) so in dem Stahlbetonkörper angeordnet ist, dass er von außen zugänglich ist, und Bewehrungsstäbe (20, 22) so angeordnet und mit dem Verbindungskörper (12) verbunden sind, dass sie vollständig in dem Turmsegment (1) eingeschlossen sind.

4. Turmsegment (1) nach einem der vorstehenden Ansprüche,
**dadurch gekennzeichnet, dass** die Befestigungswandung (14) etwa mit dem Stoß (6) abschließt und/oder dass die Befestigungswandung (14) wenigstens eine Befestigungsöffnung (24) zum Durchführen wenigstens eines Spannmittels, insbesondere einer Schraube, aufweist, um durch dieses Spannmittel eine Zugbelastung von einem weiteren Turmsegment auf die Befestigungswandung (14) zu übertragen.

5. Windenergieanlagenfurm, **gekennzeichnet durch** mehrere zu einem Turmabschnitt zusammen gesetzte Turmsegmente (1) nach einem der vorstehenden Ansprüche, wobei jeweils Stöße (6) benachbarter Turmsegmente (1) einer Turmebene aneinander gesetzt sind, Verbindungskörper (12) benachbarter Turmsegmente paarweise benachbart zueinander angeordnet sind und die benachbarten Verbindungskörper (12) miteinander verbunden sind, so dass dadurch die Turmsegmente (1) fest miteinander verbunden sind.

6. Windenergieanlagenturm nach Anspruch 5, wobei der Turm mehrere, bestimmungsgemäß übereinander angeordnete Turmabschnitte (4) aufweist und jeweils wenigstens zwei Turmsegmente (1) zu einem Turmabschnitt (4) zusammengesetzt sind und Stöße (6) der Turmsegmente (1) eines Turmabschnitts (4) zu Stößen (6) eines benachbarten Turmabschnitts (4) versetzt angeordnet sind.

7. Windenergieanlage, umfassend einen Windenergieanlagenturm nach einem der Ansprüche 5 oder 6 und/oder mehrere Turmsegmente (1) nach einem der Ansprüche 1 bis 4.

8. Verfahren zum Herstellen mehrerer Turmsegmente (1) für einen Windenergieanlagenturm, nach einem der Ansprüche 1 bis 4, **gekennzeichnet, durch** die Schritte
- Vorbereiten einer Betonform oder Schalung zum gleichzeitigen Fertigen der mehreren Turmsegmente (1),
- Positionieren einer Bewehrung und der Verbindungskörper (12) einschließlich Verankerung für jedes der mehreren Turmsegmente (1) in der Betonform bzw. Schalung,
- Auffüllen der Form bzw. Schalung mit Beton,
- Aushärten lassen des Betons,
- Entnehmen der entstandenen Turmsegmente (1) aus der Form bzw. Entfernen der Form und
- Trennen Turmsegmente (1) voneinander,
wobei die Turmsegmente (1) in der Form so zueinander angeordnet sind, wie sie bestimmungsgemäß in dem Windenergieanlagenturm angeordnet sind.

9. Verfahren nach Anspruch 8,
**dadurch gekennzeichnet, dass** die Verbindungskörper (12) jeweils einen Hohlraum bzw. eine Nische (10) aufweisen und vor dem Auffüllen der Form mit Beton jeder Hohlraum bzw. jede Nische (10) mit einem Verschlussmittel, insbesondere einer Gummischaltung verschlossen und/oder ausgefüllt wird, so dass der Hohlraum bzw. die Nische (10) nicht mit Beton zugesetzt wird, und dass das Verschlussmittel nach dem Aushärten entnommen wird, so dass der Hohlraum bzw. die Nische (10) offen und von außen zugänglich ist.

10. Verbindungskörper, nämlich erster Verbindungskörper, insbesondere Verbindungskasten oder Stahlnische, zum Einlassen in ein Windenergieanlagenturmsegment, nach einem der Ansprüche 1 bis 4, und zum Verbinden mit einem zweiten Verbindungskörper, der in ein weiteres Windenergieanlagenturmsegment, nach einem der Ansprüche 1 bis 4 eingelassen ist, um hierdurch die beiden Windenergieanlagenturmsegmente zu verbinden, zumindest um eine Verbindung zu unterstützen, und der erste Verbindungskörper umfasst
- eine Verbindungswandung zum Ansetzen an einer Verbindungswandung des zweiten Verbindungskörpers
- eine mit der Verbindungswandung des ersten Verbindungskörpers verbundene erste Seitenwand,
- zwei mit der Verbindungswandung des ersten Verbindungskörpers und der ersten Seitenwand verbundene zweite Seitenwände, so dass die Verbindungswandung des ersten Verbindungskörpers, die erste Seitenwand und die beiden zweiten Seitenwände zusammen eine Nische bilden,
und wobei der erste Verbindungskörper (12) als Verbindungskasten oder Stahlnische ausgebildet ist mit mehreren, insbesondere drei an die Befestigungswandung angrenzenden Seitenwänden (16, 18), um dadurch einen Hohlraum, insbesondere eine Nische (10) zu bilden, und wobei der erste Verbindungskörper (12) eine offene, von außen zugängliche Seite aufweist und dass der erste Verbindungskörper (12) mit in den Stahlbetonkörper einlassbaren Bewehrungsstäben (20, 22) fest verbunden ist zum Verankern des Verbindungskörpers (12) in dem Stahlbetonkörper, wobei eine erste der Seitenwände (16, 18) der offenen Seite gegenüber liegt und wenigstens ein mit der ersten Seitenwand (16) verbundener Bewehrungsstab (20) relativ zu wenigstens einem mit einer der übrigen Seitenwände (18) verbundenem Bewehrungsstab (22) um einen Neigungswinkel (26) geneigt ist, wobei der Neigungswinkel (26) vorzugsweise im Bereich von etwa 2- 8 Grad liegt, weiter vorzugsweise im Bereich von etwa 3 - 5 Grad liegt und insbesondere etwa 4 Grad beträgt.

11. Verbindungskörperpaar umfassend wenigstens einen ersten Verbindungskörper nach Anspruch 10 und einen zweiten Verbindungskörper nach Anspruch 10, wobei der erste und der zweite Verbindungskörper dazu vorbereitet sind, im Bereich ihrer Verbindungswandung aneinander angelegt zu werden, wobei der erste Verbindungskörper hierzu eine Vertiefung aufweist und der zweite Verbindungskörper eine zum Einsetzen in die Vertiefung des ersten Verbindungskörpers vorgesehene Erhebung bzw. erhabenen Bereich aufweist.

## Claims

1. A wind power installation pylon segment (1), wherein the pylon segment (1) is in the form of an outer peripheral casing segment and has a steel reinforced concrete body, with two joints (6) for attachment to joints of at least one further pylon segment and at least one connecting body is let into the steel reinforced concrete body in the region of each joint (6) and is anchored therein for connection to a connecting body (12) of an adjacent pylon segment, and the connecting body (12) has a fixing wall (14) arranged substantially parallel to the respective joint (6) for carrying a tensile loading directed transversely relative to the joint (6) and transversely relative to the fixing wall (14),
wherein the connecting body (12) is in the form of a connecting box or steel recess having a plurality of and in particular three side walls (16, 18) adjoining the fixing wall in order thereby to form a cavity, in particular a recess (10), and wherein the connecting body (12) has an open side accessible from the exterior and the connecting body (12) is fixedly connected to reinforcing bars (20, 22) let into the steel reinforced concrete body to anchor the connecting body (12) in the steel reinforced concrete body,
wherein
a first of the side walls (16, 18) is opposite the open side and at least one reinforcing bar (20) connected to the first side wall (16) is inclined relative to at least one reinforcing bar (22) connected to one of the other side walls (18) through an angle of inclination (26), wherein the angle of inclination (26) is preferably in the range of about 2 - 8 degrees, further preferably in the range of about 3 - 5 degrees and in particular is about 4 degrees.

2. A pylon segment (1) according to claim 1 **characterised in that** the pylon segment (1) is a precast concrete part.

3. A pylon segment (1) according to one of the preceding claims **characterised in that** the connecting body (12) is so arranged in the steel reinforced concrete body that it is accessible from the exterior and reinforcing bars (20, 22) are so arranged and connected to the connecting body (12) that they are completely enclosed in the pylon segment (1).

4. A pylon segment (1) according to one of the preceding claims **characterised in that** the fixing wall (14) terminates approximately with the joint (6) and/or the fixing wall (14) has at least one fixing opening (24) for passing therethrough at least one tensioning means, in particular a screw, in order by said tensioning means to transmit a tensile loading from a further pylon segment to the fixing wall (14).

5. A wind power installation pylon **characterised by** a plurality of pylon segments (1) according to one of the preceding claims, which are assembled to afford a pylon portion, wherein joints (6) of adjacent pylon segments (1) of a pylon plane are respectively fitted to each other, connecting bodies (12) of adjacent pylon segments are arranged in adjacent paired relationship with each other and the adjacent connecting bodies (12) are connected together so that the pylon segments (1) are fixedly connected together thereby.

6. A wind power installation pylon according to claim 5 wherein the pylon has a plurality of pylon portions (1) which are arranged in mutually superposed relationship in the required fashion and at least two pylon segments (1) are respectively assembled to afford a pylon portion (1) and joints (6) of the pylon segments (1) of a pylon portion (4) are arranged in displaced relationship with joints (6) of an adjacent pylon portion (4).

7. A wind power installation including a wind power installation pylon according to one of claims 5 and 6 and/or a plurality of pylon segments (1) according to one of claims 1 to 4.

8. A process for the production of a plurality of pylon segments (1) for a wind power installation pylon according to one of claims 1 to 4, **characterised by** the steps of:
- providing a concrete mould or shuttering for simultaneous production of the plurality of pylon segments (1),
- positioning a reinforcement and the connecting bodies (12) inclusive of anchoring for each of the plurality of pylon segments (1) in the concrete mould or shuttering,
- filling the mould or shuttering with concrete,
- allowing the concrete to set,
- removing the resulting pylon segments (1) from the mould or removing the mould, and
- separating pylon segments (1) from each other,
wherein the pylon segments (1) are arranged in the mould in relation to each other in the way in which they are arranged in the required fashion in the wind power installation pylon.

9. A process according to claim 8 **characterised in that** the connecting bodies (12) each have a respective cavity or a recess (10) and prior to filling of the mould with concrete each cavity or each recess (10) is closed and/or filled up with a closure means, in particular a rubber sheathing, so that the cavity or the recess (10) is not clogged with concrete and the closure means after setting of the concrete is removed so that the cavity or recess (10) is open and accessible from the exterior.

10. A connecting body, namely a first connecting body, in particular a connecting box or steel recess, for letting into a wind power installation pylon segment, according to one of claims 1 to 4, and for connection to a second connecting body which is let into a further wind power installation pylon segment, according to one of claims 1 to 4, thereby to connect the two wind power installation pylon segments, at least to support a connection, and the first connecting body includes
- a connecting wall for attachment to a connecting wall of the second connecting body,
- a first side wall connected to the connecting wall of the first connecting body, and
- two second side walls which are connected to the connecting wall of the first connecting body and the first side wall so that the connecting wall of the first connecting body, the first side wall and the two second side walls together form a recess,
and wherein the connecting body (12) is in the form of a connecting box or steel recess having a plurality of and in particular three side walls (16, 18) adjoining the fixing wall in order thereby to form a cavity, in particular a recess (10), and wherein the connecting body (12) has an open side accessible from the exterior and the connecting body (12) is fixedly connected to reinforcing bars (20, 22) which can be let into the steel reinforced concrete body to anchor the connecting body (12) in the steel reinforced concrete body,
wherein
a first of the side walls (16, 18) is opposite the open side and at least one reinforcing bar (20) connected to the first side wall (16) is inclined relative to at least one reinforcing bar (22) connected to one of the other side walls (18) through an angle of inclination (26), wherein the angle of inclination (26) is preferably in the range of about 2 - 8 degrees, further preferably in the range of about 3 - 5 degrees and in particular is about 4 degrees.

11. A connecting body pair including at least a first connecting body according to claim 10 and a second connecting body according to claim 12, wherein the first and second connecting bodies are adapted to be placed against each other in the region of their connecting wall, wherein for that purpose the first connecting body has a depression and the second connecting body has a raised region or raised portion provided for fitting into the depression in the first connecting body.

## Revendications

1. Segment de mât d'éolienne (1), dans lequel le segment de mât (1) est réalisé en tant que segment d'enveloppe et présente un corps en béton armé, avec deux bords (6) à appliquer sur des bords d'au moins un autre segment de mât, et au moins un corps de liaison est encastré dans le corps en béton armé dans la zone de chaque bord (6) et y est ancré pour la liaison à un corps de liaison (12) d'un segment de mât adjacent, et le corps de liaison (12) présente une paroi de fixation (14) agencée sensiblement parallèlement au bord (6) respectif pour l'absorption d'une charge de traction dirigée transversalement au bord (6) et transversalement à la paroi de fixation (14),
dans lequel le corps de liaison (12) est réalisé en tant que boîtier de liaison ou niche en acier avec plusieurs, en particulier trois, parois latérales (16, 18) adjacentes à la paroi de fixation, pour former ainsi une cavité, en particulier une niche (10), et
dans lequel le corps de liaison (12) présente un côté ouvert, accessible de l'extérieur et que le corps de liaison (12) est relié fixement à des barres d'armature (20, 22) encastrées dans le corps en béton armé pour l'ancrage du corps de liaison (12) dans le corps en béton armé,
dans lequel une première des parois latérales (16, 18) fait face au côté ouvert et au moins une barre d'armature (20) reliée à la première paroi latérale (16) est inclinée d'un angle d'inclinaison (26) par rapport à au moins une barre d'armature (22) reliée aux autres parois latérales (18), dans lequel l'angle d'inclinaison (26) se trouve de préférence dans la plage d'environ 2-8 degrés, de préférence encore dans la plage d'environ 3-5 degrés et est en particulier d'environ 4 degrés.

2. Segment de mât (1) selon la revendication 1,
**caractérisé en ce que** le segment de mât (1) est un élément préfabriqué en béton.

3. Segment de mât (1) selon l'une quelconque des revendications précédentes,
**caractérisé en ce que** le corps de liaison (12) est agencé dans le corps en béton armé de sorte qu'il est accessible de l'extérieur, et des barres d'armature (20, 22) sont agencées et reliées au corps de liaison (12) de sorte qu'elles sont entièrement incorporées dans le segment de mât (1).

4. Segment de mât (1) selon l'une quelconque des revendications précédentes,
**caractérisé en ce que** la paroi de fixation (14) se termine à peu près avec le bord (6) et/ou que la paroi de fixation (14) présente au moins une ouverture de fixation (24) pour le passage d'au moins un moyen de serrage, en particulier d'une vis, pour transmettre une charge de traction d'un autre segment de mât à la paroi de fixation (14) par le biais de ce moyen de serrage.

5. Mât d'éolienne, **caractérisé par** plusieurs segments de mât (1) selon l'une quelconque des revendications précédentes agencés en une section de mât, dans lequel respectivement des bords (6) de segments de mât (1) adjacents d'un plan de mât sont installés l'un contre l'autre, des corps de liaison (12) de segments de mât adjacents sont agencés par paire de manière adjacente l'un par rapport à l'autre et les corps de liaison (12) adjacents sont reliés l'un à l'autre de sorte que les segments de mât (1) sont ainsi reliés fixement l'un à l'autre.

6. Mât d'éolienne selon la revendication 5, dans lequel le mât présente plusieurs sections de mât (4) agencées l'une au-dessus de l'autre conformément à l'utilisation et respectivement au moins deux segments de mât (1) sont agencés en une section de mât (4) et des bords (6) des segments de mât (1) d'une section de mât (4) sont agencés de manière décalée par rapport à des bords (6) d'une section de mât (4) adjacente.

7. Éolienne, comprenant un mât d'éolienne selon l'une quelconque des revendications 5 ou 6 et/ou plusieurs segments de mât (1) selon l'une quelconque des revendications 1 à 4.

8. Procédé de fabrication de plusieurs segments de mât (1) pour un mât d'éolienne, selon l'une quelconque des revendications 1 à 4, **caractérisé par** les étapes de
- préparation d'un moule à béton ou coffrage pour la fabrication simultanée des plusieurs segments de mât (1),
- positionnement d'une armature et des corps de liaison (12) y compris ancrage pour chacun des plusieurs segments de mât (1) dans le moule à béton ou coffrage,
- remplissage du moule ou coffrage de béton,
- durcissement du béton,
- retrait des segments de mât (1) produits du moule ou retrait du moule et
- séparation des segments de mât (1) les uns des autres,
dans lequel les segments de mât (1) sont agencés l'un par rapport à l'autre dans le moule de telle manière qu'ils sont agencés conformément à l'utilisation dans le mât d'éolienne.

9. Procédé selon la revendication 8,
**caractérisé en ce que** les corps de liaison (12) présentent respectivement une cavité ou une niche (10) et, avant le remplissage du moule de béton, chaque cavité ou chaque niche (10) est obturée et/ou remplie d'un moyen d'obturation, en particulier d'un montage en caoutchouc, de sorte que la cavité ou la niche (10) ne soit pas engorgée de béton, et que le moyen d'obturation soit retiré après le durcissement de sorte que la cavité ou la niche (10) soit ouverte et accessible de l'extérieur.

10. Corps de liaison, à savoir premier corps de liaison, en particulier boîtier de liaison ou niche en acier, pour l'encastrement dans un segment de mât d'éolienne, selon l'une quelconque des revendications 1 à 4, et pour la liaison à un deuxième corps de liaison, qui est encastré dans un autre segment de mât d'éolienne, selon l'une quelconque des revendications 1 à 4, pour relier ainsi les deux segments de mât d'éolienne, au moins pour soutenir une liaison, et comprend le premier corps de liaison
- une paroi de liaison pour l'application sur une paroi de liaison du deuxième corps de liaison
- une première paroi latérale reliée à la paroi de liaison du premier corps de liaison,
- deux deuxièmes parois latérales reliées à la paroi de liaison du premier corps de liaison et à la première paroi latérale de sorte que la paroi de liaison du premier corps de liaison, la première paroi latérale et les deux deuxièmes parois latérales forment ensemble une niche,
et dans lequel le premier corps de liaison (12) est réalisé en tant que boîtier de liaison ou niche en acier avec plusieurs, en particulier trois, parois latérales (16, 18) adjacentes à la paroi de fixation, pour former ainsi une cavité, en particulier une niche (10), et dans lequel le premier corps de liaison (12) présente un côté ouvert, accessible de l'extérieur et que le premier corps de liaison (12) est relié fixement à des barres d'armature (20, 22) pouvant être encastrées dans le corps en béton armé pour l'ancrage du corps de liaison (12) dans le corps en béton armé,
dans lequel une première des parois latérales (16, 18) fait face au côté ouvert et au moins une barre d'armature (20) reliée à la première paroi latérale (16) est inclinée d'un angle d'inclinaison (26) par rapport à au moins une barre d'armature (22) reliée aux autres parois latérales (18), dans lequel l'angle d'inclinaison (26) se trouve de préférence dans la plage d'environ 2-8 degrés, de préférence encore dans la plage d'environ 3-5 degrés et est en particulier d'environ 4 degrés.

11. Paire de corps de liaison comprenant au moins un premier corps de liaison selon la revendication 10 et un deuxième corps de liaison selon la revendication 10, dans lequel le premier et le deuxième corps de liaison sont préparés pour être installés l'un contre l'autre dans la zone de leur paroi de liaison, dans laquelle le premier corps de liaison présente pour ce faire un évidement et le deuxième corps de liaison présente une élévation ou zone élevée prévue pour l'insertion dans l'évidement du premier corps de liaison.
